# EUROPÄISCHE PATENTANMELDUNG

(11) **EP 2 455 180 A1**
(43) Veröffentlichungstag der Anmeldung: **23.05.2012**
(21) Anmeldenummer: 10014686.9
(22) Anmeldetag: 17.11.2010
(51) Int. Cl.: B23K 35/30, B32B 15/01, C21D 9/50, B21B 27/00

(54) **Eisen-Chrom-Molybdän-Mangan Legierung, eine Verwendung dieser Legierung, ein Verfahren zur Erstellung dieser Legierung, eine Rolle für eine Walzanlage mit einer Oberfläche aus dieser Legierung sowie eine Rolle für eine Walzanlage mit einer Oberfläche, die mit einem Verfahren zur Erstellung dieser Legierung erstellt ist**

(71) Anmelder: CETTO MASCHINENBAU GMBH & CO. KG., 40878 Ratingen (DE)
(72) Erfinder: Dehnhardt, Stefan, Dr.-Ing, 40878 Ratingen (DE)
(74) Vertreter: Berkenbrink, Kai-Oliver

(57) **Zusammenfassung**

Die Erfindung betrifft eine Eisen-Chrom-Molybdän-Mangan-Legierung, die Verwendung dieser Legierung, ein Verfahren zur Erstellung dieser Legierung, eine Rolle für eine Walzanlage für eine Oberfläche aus dieser Legierung sowie eine Rolle für eine Walzanlage mit einer Oberfläche, die mit einem Verfahren zur Erstellung dieser Legierung erstellt ist.

## Beschreibung

Die Erfindung betrifft eine Eisen-Chrom-Molybdän-Mangan-Legierung, eine Verwendung dieser Legierung, ein Verfahren zur Erstellung dieser Legierung, eine Rolle für eine Walzanlage für eine Oberfläche aus dieser Legierung sowie eine Rolle für eine Walzanlage mit einer Oberfläche, die mit einem Verfahren zur Erstellung dieser Legierung erstellt ist.

Walzanlagen in Form von Warmbandstraßen dienen zur Herstellung von Metallbändern aus ungewalztem Vormaterial (Brammen).

Während des Warmwalzprozesses in einer Warmbandstraße wird das Walzgut auf Temperaturen von etwa 1.250° C erwärmt und oberhalb der Rekristallisationstemperatur im Walzspalt des Warmwalzwerkes durch Druck auf die vorgegebene Dicke reduziert. Beim Warmwalzprozess wird das erwärmte Walzgut in Form einer Bramme zunächst in der Vorstraße in mehreren Stichen zu einem Vorband gewalzt. In der der Vorstraße nachgestalteten Fertigstraße (Fertigstaffel) wird das Vorband auf seine Enddicke gewalzt. An die Fertigstraße schließen sich der Auslaufrollgang mit Kühleinrichtungen und die Aufwickelvorrichtung (Haspel) an.

Die Vorstraße einer Warmbandstraße besteht aus einem oder mehreren Vorgerüsten. Ebenso besteht die Fertigstraße aus einem oder mehreren Fertiggerüsten. Zur Zu- und Abführung des Walzgutes zu und von den Vor-und Fertiggerüsten weist eine Warmbandstraße Rollgänge auf. Diese Rollgänge weisen hintereinander geschaltete Rollen auf, über die das Walzgut (Bramme, Vorband, Fertigband) läuft. Am Ende der Fertigstraße ist eine Treibvorrichtung angeordnet, die eine untere Treibrolle und eine obere Treibrolle umfasst. Zur Einstellung des Spaltes zwischen diesen Treibrollen ist die obere Treibrolle verstellbar gelagert. Die Treibrollen haben die Aufgabe, das gewalzte Band zu Ergreifen und über Umlenkrollen zum Haspel umzulenken.

Der Haspel schließlich wickelt das Band zu Coils.

Die Rollen oder Walzen der Rollgänge in einer Warmbandstraße sowie die Treibrollen unterliegen einer hohen mechanischen und chemischen Beanspruchung (Rollen und Walzen der Rollgänge sowie Treibrollen werden nachfolgend zusammenfassend auch als "Rollen" bezeichnet). Die mechanische Beanspruchung der Rollen in einer Warmbandstraße resultiert insbesondere aus den stoßartigen Belastungen durch das zu walzende Band, auf Grund dessen die Rollen einem abrasiven Verschleiß unterliegen. Die chemische Beanspruchung der Rollen resultiert insbesondere aus dem Kontakt der Rollen mit Wasser, das beim Warmwalzprozess in großen Mengen zur Kühlung eingesetzt wird.

Um die Standzeiten von Rollen in Warmbandstraßen zu verlängern, werden diese regelmäßig am Rollenballen durch Auftragsschweißung oder Spritzverfahren oberflächenveredelt.

Zur Oberflächenveredelung der Rollen in Warmbandstraßen, werden diese mit Oberflächenbeschichtungen versehen. Für diese Oberflächenbeschichtungen werden bisher grundsätzlich zwei Legierungsgruppen eingesetzt.

Zum einen ist dies die Legierungsgruppe der martensitischen Chromstähle, die einen guten Widerstand gegen abrasiven Verschleiß bieten. Bei dieser Legierungsgruppe liegt der Gehalt an Chrom (Cr) bei 4-6 % und der Gehalt an Kohlenstoff (C) bei 0,2-0,7 %, Zur Erhöhung der Warmfestigkeit wird meistens ferner Molybdän (Mo) in Anteile von 2,5-3,5 % beigemischt. Vanadium (V) und Titan (Ti) liegen regelmäßig ebenfalls in geringen Anteilen in der Legierung vor. Die beiden letztgenannten Elemente dienen unter anderem dazu, die chemische Analyse nach dem Schaeffler-Diagramm bezüglich des δ-Ferrit-Anteils von maximal 10 % auszubalancieren.

Zum anderen werden zur Verbesserung des Widerstandes der Rollen gegen Korrosion Oberflächenbeschichtungen aus der Legierungsgruppe der korrosionsbeständigen Chromstähle eingesetzt. Diese Legierungsgruppe zeichnet sich durch eine chemische Analyse mit einem Chromgehalt > 12 % und einem Kohlenstoffgehalt im Bereich von 0,1 - 0,35 % aus. Zur Erhöhung der Warmfestigkeit wird meistens Molybdän (Mo) in Anteilen von 0,8 - 1,2 % beigemischt. Auch hier ergänzen Vanadium und Titan mit geringeren Anteilen das Spektrum der Legierungselemente, wobei die letztgenannten Elemente wiederum unter anderem dazu dienen, die chemische Analyse nach dem Schaeffler-Diagramm bezüglich des 8-Ferrit-Anteils von maximal 10 % auszubalancieren.

Die Erfahrung hat jedoch gezeigt, dass Rollen, die mit der vorbezeichneten Legierungsgruppe der korrosionsbeständigen Chromstähle oberflächenveredelt sind, anfällig für "Kleber" sind. Bei diesen Klebern handelt es sich um kleine Partikel, beispielsweise Zunder oder Eisenpartikel, die an der Oberfläche der Rollen anhaften und das Walzgut beschädigen können. Daher werden für Rollen in Warmbandstraßen zunehmend Rollen eingesetzt, die mit der erstgenannten Legierungsgruppe der martensitischen Chromstähle oberflächenveredelt sind, obwohl der korrosive Verschleiß gegenüber dem abrasiven Verschleiß meistens größer ist und durch diese Legierung nur unzureichend gehemmt werden kann.

Der Erfindung liegt die Aufgabe zu Grunde, eine Legierung für eine Oberflächenbeschichtung von Rollen für Walzanlagen zur Verfügung zu stellen, die einen guten Widerstand sowohl gegen abrasiven als auch gegen korrosiven Verschleiß bietet und die gleichzeitig nicht anfällig ist für die Anhaftung von Klebern.

Ferner liegt der Erfindung die Aufgabe zu Grunde, ein Verfahren zur Erstellung einer Oberflächenbeschichtung von Rollen für Walzanlagen aus einer solchen Legierung zur Verfügung zu stellen.

Ferner liegt der Erfindung die Aufgabe zu Grunde, eine Rolle für Walzanlagen mit einer Oberflächenbeschichtung zur Verfügung zu stellen, die mit einem solchen Verfahren erstellt ist.

Schließlich liegt der Erfindung die Aufgabe zu Grunde, eine Rolle für Walzanlagen mit einer Oberflächenbeschichtung aus einer solchen Legierung zur Verfügung zu stellen.

Zur Lösung der erstgenannten Aufgabe wird erfindungsgemäß zur Verfügung gestellt eine Eisen-Chrom-Molybdän-Mangan-Logierung zur Oberflächenbeschichtung von Rollen für Walzanlagen mit folgender chemischer Zusammensetzung (in Masse-%):

| | |
|---|---|
| Cr: | 7,5 - 10,5 % |
| Mo: | 1,0 - 2,0 % |
| C: | 0,2 - 0,5 % |
| Mn: | 0,4 - 1,4 % |
| Si: | 0- 1,0 % |
| Ni: | 0 - 0,6 % |
| Ti: | 0-0,4% |
| V: | 0 - 0,4 % |
| S: | 0 - 0,3 % |
| P: | 0 - 0,3 % |
| Cu: | 0 - 0,3 % |
| Rest: | Fe sowie herstellungsbedingte Verunreinigungen. |

Erfindungsgemäß hat sich herausgestellt, dass die vorbezeichnete Legierung hervorragende mechanische Eigenschaften, insbesondere einen guten Widerstand gegen abrasiven Verschleiß, aufweist, sowie gut beständig gegen Korrosion ist. Ferner hat sich herausgestellt, dass die erfindungsgemäße Legierung äußerst unanfällig für das Anhaften von Klebern ist.

Die erfindungsgemäße Legierung verbindet damit die guten Eigenschaften der oben genannten ersten und zweiten Legierungsgruppe.

Von zentraler Bedeutung für diese Eigenschaften der erfindungsgemäßen Legierung ist der Anteil an Chrom in der Legierung, der zwischen dem Anteil an Chrom in den vorgenannten Legierungsgruppen der martensitischen Chromstähle einerseits und korrosionsbeständigen Chromstähle andererseits liegt.

Erfindungsgemäß liegt der Anteil an dem Element Chrom (Cr) in der Legierung bei wenigstens 7,5 %, also beispielsweise auch bei wenigstens 7,8 %, 8,0 %, 8,2 %, 8,5 %, 8,8 % oder 9,0 %. Der Anteil an Chrom in der Legierung liegt bei höchstens 10, 5 %, also beispielsweise auch bei höchstens 10,2 %, 10,0 %, 9,8 % oder 9,5 %.

Die hierin gemachten Angaben in "%" sind jeweils "Masse-%".

Der Anteil an dem Element Molybdän (Mo) in der Legierung liegt bei wenigstens 1 %, also beispielsweise auch bei wenigstens 1,1 %, 1,2 %, 1,3 % oder 1,4 %. Der Anteil an Molybdän in der Legierung liegt bei höchstens 2,0 %, also beispielsweise auch bei höchstens 1,9 %, 1,8 %, 1,7 % oder 1,6%.

Der Anteil an dem Element Kohlenstoff (C) in der Legierung liegt bei wenigstens 0,2 %, also beispielsweise auch bei wenigstens 0,25 %, 0,3 % oder 0,35 %, Der Anteil an Kohlenstoff in der Legierung liegt bei höchstens 0,5 %, also beispielsweise auch bei höchstens 0,48 %, 0,45 % oder 0,42 %.

Der Anteil an dem Element Mangan (Mn) in der Legierung liegt bei wenigstens 0,4 %, also beispielsweise auch bei wenigstens 0,5 %, 0,6 % oder 0,7 %. Der Anteil an Mangan in der Legierung liegt bei höchstens 1,4 %, also beispielsweise auch bei höchstens 1,2 %, 1,0 % oder 0,8 %.

Der Anteil an dem Element Eisen (Fe) in der Legierung liegt bei wenigstens 81,8 %, also beispielsweise auch bei wenigstens 82,0 %, 83,0 %, 84,0 %, 85,0 % oder 86,0 %. Der Anteil an Eisen in der Legierung liegt bei höchstens 90,9 %, also beispielsweise auch bei höchstens 90 %, 89 %,88 % oder 87,0 %.

Soweit die erfindungsgemäße Legierung auch eines oder mehrere der Elemente Silizium (Si), Titan (Ti), Vanadium (V), Nickel (Ni), Phosphor (P), Schwefel (S) oder Kupfer (Cu) enthält, können diese Elemente beispielsweise in den folgenden Anteilen in der Legierung vorliegen:

| | |
|---|---|
| Si: | 0-1,0% |
| Ni: | 0 - 0,6 % |
| Ti: | 0 - 0,4 % |
| V: | 0 - 0,4% |
| S: | 0 - 0,3% |
| P: | 0 - 0,3% |
| Cu: | 0 - 0,3 %. |
| Rest: | Fe sowie herstellungsbedingte Verunreinigungen. |

Soweit Silizium in der Legierung vorliegt, liegt der Anteil daran bei höchstens 1,0 %, also beispielsweise auch bei höchstens 0,8 %, 0,6 % oder 0,4 %. Gemäß einer Untergrenze kann der Anteil an Silizium in der Legierung bei wenigstens 0,1 % liegen, also beispielsweise auch bei wenigstens 0,2 % oder 0,3 %.

Soweit Nickel in der Legierung vorliegt, liegt der Anteil daran bei höchstens 0.6 %, also beispielsweise auch bei höchstens 0,5 %, 0,4 % oder 0,3 %. Gemäß einer Untergrenze kann der Anteil an Nickel in der Legierung bei wenigstens 0,05 % liegen, also beispielsweise auch bei wenigstens 0,1 %, 0,15 % oder 0,2 %.

Soweit Titan in der Legierung vorliegt, liegt der Anteil daran bei höchstens 0,4 %, also beispielsweise auch bei höchstens 0,3 %, 0,2 % oder 0,1 %. Gemäß einer Untergrenze kann der Anteil an Titan in der Legierung bei wenigstens 0,02 % liegen, also beispielsweise auch bei wenigstens 0,04 %, 0,06 % oder 0,08 %.

Soweit Vanadium in der Legierung vorliegt, kann der Anteil daran bei höchstens 0,4 % liegen, also beispielsweise auch bei höchstens 0,3 %, 0,2 % oder 1,5 %. Gemäß einer Untergrenze kann der Anteil an Vanadium in der Legierung bei wenigstens bei 0,04 % liegen, also beispielsweise auch bei 0,06 %, 0,08 %, 0,10 % oder 0,12 %.

Soweit Schwefel in der Legierung vorliegt, liegt der Anteil daran bei höchstens 0,3 %, also beispielsweise auch bei höchstens 0,2 %, 0,1 % oder 0,08 %. Gemäß einer Untergrenze kann der Anteil an Schwefel in der Legierung bei wenigstens 0,01 % liegen, also beispielsweise auch bei wenigstens 0,02 % oder 0,04 %.

Soweit Phosphor in der Legierung vorliegt, liegt der Anteil daran bei höchstens 0,3 %, also beispielsweise auch bei höchstens 0,2 %, 0,1 %, 0,08 %, 0,06 % oder 0,04 %. Gemäß einer Untergrenze kann der Anteil an Phosphor in der Legierung bei wenigstens 0,005 % liegen, also beispielsweise auch bei wenigstens 0,008 %, 0,01 % oder 0,015 %.

Soweit Kupfer in der Legierung vorliegt, liegt der Anteil daran bei höchstens 0,3 %, also beispielsweise auch bei höchstens 0,2 %, 0,1 % oder 0,08 %. Gemäß einer Untergrenze kann der Anteil an Kupfer in der Legierung bei wenigstens 0,01 % liegen, also beispielsweise auch bei wenigstens 0,02 % oder 0,04 %.

Ferner kann die Legierung Verunreinigungen, insbesondere herstellungsbedingte Verunreinigungen enthalten. Bei diesen Verunreinigungen kann es sich beispielsweise um Verunreinigungen mit einem oder mehreren der Elemente Aluminium (Al), Magnesium (Mg), Kalzium (Ca), Zirkonium (Zr) oder Sauerstoff (O) handeln. Die Summe an Verunreinigungen in der erfindungsgemäßen Legierung liegt bevorzugt bei höchstens 0,5 %, besonders bevorzugt bei höchstens 0,3 %, 0,1 %, 0,1 % oder 0,05 %.

Die erfindungsgemäße Legierung weist die hervorragende Härteeigenschaften auf. Die Härte der erfindungsgemäßen Legierung kann bis zu 60 HRC betragen (Rockwell-Härte, bestimmt beim Verfahren nach Skala C, gemäß Norm ISO 6508-1: 2005). Gemäß einer Untergrenze kann die Härte einer erfindungsgemäßen Legierung bei wenigstens 43 HRC liegen, womit die Härte der erfindungsgemäßen Legierung im Bereich von 43 bis 60 HRC liegen kann.

Erfindungsgemäß wird die hierin beschriebene Legierung insbesondere zur Oberflächenbeschichtung von Rollen für Walzanlagen verwendet. Gegenstand der vorliegenden Erfindung ist demnach auch die Verwendung der hierin beschriebenen Legierung zur Oberflächenbeschichtung von Rollen für Walzanlagen.

Erfindungsgemäß kann insbesondere vorgesehen sein, dass die hierin beschriebene Legierung durch Auftragsschweißung auf der Oberfläche von Rollen erstellt wird. Gegenstand der vorliegenden Erfindung ist demnach ferner auch ein Verfahren zur Erstellung einer Oberflächenbeschichtung von Rollen für Walzanlagen, bei dem durch Auftragsschweißung auf der Oberfläche von Rollen eine Beschichtung in Form einer hierin beschriebenen Legierung erstellt wird.

Rollen für Walzanlagen, insbesondere Rollen für Rollgänge von Walzanlagen sowie Treibrollen, weisen ein kreiszylindrisches Mittelteil (den sogenannten "Ballen") sowie endseitige Lagerzapfen auf, über die die Rollen drehbar in der Walzanlage, also insbesondere einer Warmband- oder Kaltbandantage, gelagert werden können. Über das drehbar gelagerte, kreiszylindrische Mittelteil der Rollen ist das Walzgut in der Walzanlage förderbar.

Die erfindungsgemäße, hierin beschriebene Legierung wird zur Oberflächenbeschichtung des Mittelteils dieser Rollen, die in Kontakt mit dem Walzgut treten, verwendet.

Erfindungsgemäß kann nunmehr bevorzugt vorgesehen sein, dass diese in Kontakt mit dem Walzgut tretende Oberfläche der Rolle durch Auftragsschweißung erstellt ist.

Bekanntermaßen handelt es sich beim Auftragsschweißen um die Beschichtung eines Werkstückes durch Schweißen. Dabei wird ein Zusatzwerkstoff durch Schweißen auf einen Grundwerkstoff aufgetragen. In der Regel unterscheiden sich der Zusatzwerkstoff und der Grundwerkstoff voneinander, so dass es beim Auftragsschweißen zu einer Aufmischung des Zusatzwerkstoffes mit dem Grundwerkstoff kommt.

Bei dem erfindungsgemäßen Verfahren wird der Grundwerkstoff aus den Oberflächenabschnitten der Rolle gebildet, auf denen die erfindungsgemäße Legierung durch Auftragsschweißen zu erstellen ist. Diese zu beschichtenden Oberflächenabschnitte der Rolle bestehen aus einer Metalllegierung, die sich regelmäßig von dem bei der Auftragsschweißung aufzutragenden Zusatzwerkstoff unterscheidet. Insoweit kommt es bei dem erfindungsgemäßen Verfahren zur Oberflächenbeschichtung durch Auftragsschweißung zu einer Aufmischung des Schweißzusatzwerkstoffes mit dem Grundwerkstoff der Rolle. Diese Aufmischung kann beispielsweise 10 bis 50 % betragen.

Grundsätzlich kann für das erfindungsgemäße Verfahren zur Oberflächenbeschichtung von Rollen für Walzanlagen, bei dem durch Auftragsschweißung auf die Oberfläche einer Rolle eine hierin beschriebene Legierung erstellt wird, jedes aus dem Stand der Technik bekannte Verfahren zur Auftragsschweißung zur Anwendung kommen. Besonders bevorzugt kann für das erfindungsgemäße Verfahren jedoch eine Unterpulver-Auftragsschweißung mit Drahtelektrode ("UP-Schweißen mit Drahtelektrode", wobei als Drahtelektrode ein Massivdraht oder ein Fülldraht verwendet werden kann), eine Unterpulver-Auftragsschweißung mit Bandelektrode ("UP-Schweißen mit Bandelektrode", wobei als Bandelektrode ein Massivband oder Füllband verwendet werden kann) oder eine Open Arc-Schweißung durchgeführt werden.

Nach einer alternativen Ausführungsform ist erfindungsgemäß ein Verfahren zur Oberflächenbeschichtung für Rollen von Walzanlagen vorgesehen, bei dem durch Spritzverfahren auf der Oberfläche der Rollen eine hierin beschriebene Legierung erstellt wird.

Bei einem solchen Spritzverfahren kann es sich insbesondere um ein thermisches Spritzverfahren handeln, beispielsweise um ein Schmelzbad-, Flamm-, Hochgeschwindigkeitsflamm-, Flammschock-, Lichtbogen- oder Plasma-Spritz-Verfahren.

Die hierin beschriebene Legierung kann beispielsweise in Schichtdicken bis zu 40 mm auf die Rollen aufgetragen werden, beispielsweise in Schichtdicken im Bereich von 25-40 mm oder im Bereich von 25-30 mm.

Weiterer Gegenstand der Erfindung ist eine Rolle für Walzanlagen mit einer Oberflächenbeschichtung aus einer hierin beschriebenen Legierung.

Bei der erfindungsgemäßen Rolle kann es sich insbesondere um eine Rolle eines Rollgangs für beziehungsweise in einer Walzanlage handeln oder um eine Treibrolle für beziehungsweise in einer Walzanlage. Bei der Walzanlage kann es sich um eine Warmwalz- oder eine Kaltwalzanlage handeln. Bevorzugt weisen sämtliche Oberflächenabschnitte der erfindungsgemäßen Rolle, die in der Walzanlage in Kontakt mit dem Walzgut treten können, die erfindungsgemäße Legierung auf.

Soweit die hierin beschriebene Legierung mittels Auftragsschweißen auf der Oberfläche einer Rolle erstellt ist, kann es beim Schweißen, wie oben ausgeführt zu einer Aufmischung des Schweißzusatzwerkstoffes mit dem Grundmaterial der Rolle kommen. Diese Aufmischung kann in verschiedenen Bereichen der durch die Auftragsschweißung aufgetragenen Beschichtung unterschiedlich stark sein. Erfindungsgemäß kann dabei vorgesehen sein, dass zumindest die äußerste (also außenliegende) Schicht der Oberflächenbeschichtung der erfindungsgemäßen Legierungszusammensetzung entspricht.

Gegenstand der Erfindung ist schließlich eine Rolle für Walzanlagen mit einer Oberflächenbeschichtung, die mit einem der hierin beschriebenen Verfahren erstellt ist.

In der nachfolgenden Tabelle ist eine beispielhafte chemische Zusammensetzung einer erfindungsgemäßen Eisen-Chrom-Molybdän-Mangan-Legierung aufgelistet.

| Element | % |
|---|---|
| Cr | 9,5 |
| Mo | 1,5 |
| C | 0,41 |
| Mn | 0,8 |
| Si | 0,38 |
| Ni | 0,22 |
| Ti | 0,09 |
| V | 0,13 |
| S | 0,06 |
| P | 0,02 |
| Cu | 0,06 |
| Fe | Rest |

| | |
|---|---|
| Die Legierung gemäß Tabelle 1 weist eine Festigkeit von 55 HRC auf. | |

In der nachfolgenden Figurenbeschreibung ist ein schematisiertes Ausführungsbeispiel einer erfindungsgemäßen Rolle dargestellt.

Dabei zeigt
- Figur 1: eine Schnittansicht einer Rolle und
- Figur 2: eine perspektivische Ansicht einer Rolle, teilweise freigelegt.

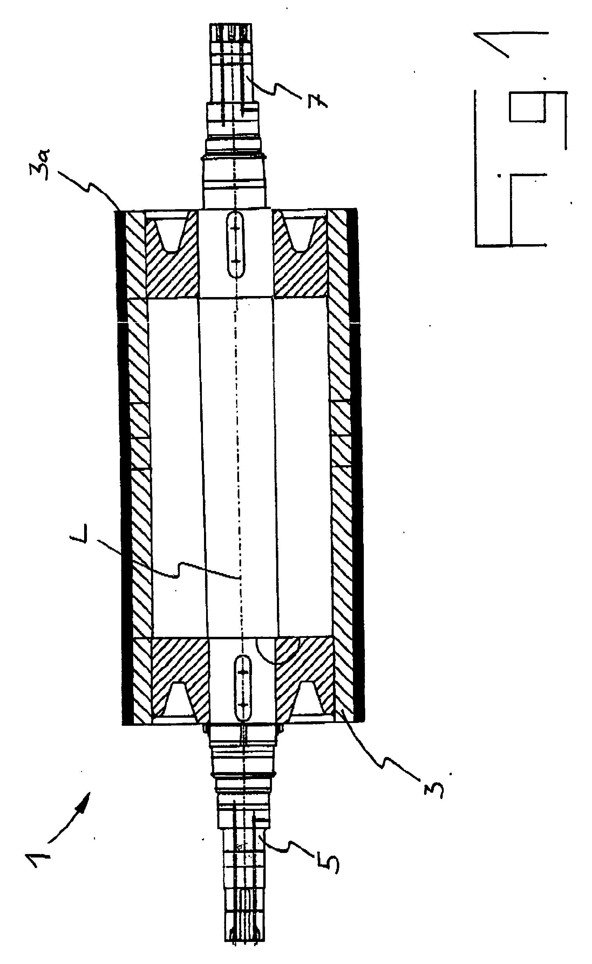

Figur 1 zeigt eine Ansicht einer Rolle 1 in einer Schnittansicht entlang der Längsachse L der Rolle 1. Bei der Rolle 1 handelt es sich um eine obere Treibrolle für eine Warmbandstraße. Die Rolle 1 umfasst den Ballen 3 sowie endseitige Lagerzapfen 5 und 7, über die die Rolle 1 drehbar lagerbar ist.

Der Ballen 3 der Rolle 1 weist eine durch Auftragsschweißung aufgetragene Oberflächenbeschichtung 3a auf, deren Zusammensetzung der hierin beschriebenen Legierung entspricht.

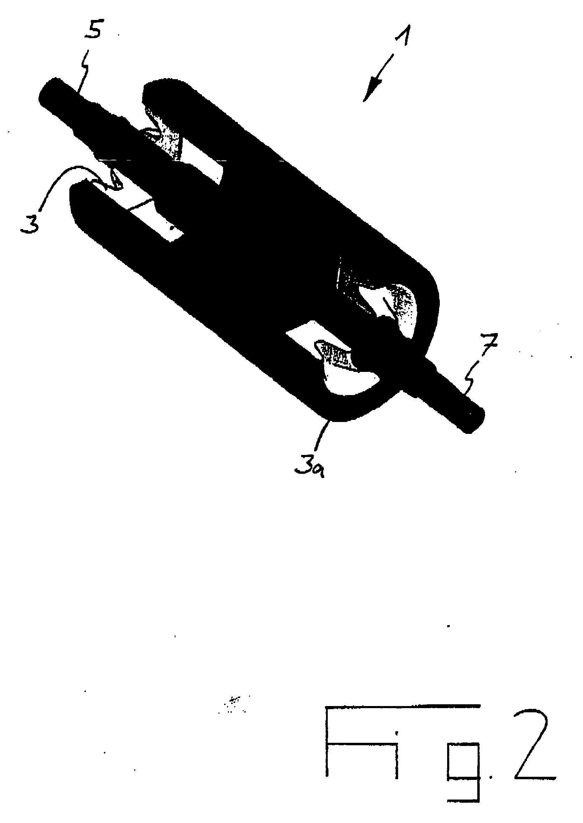

In der perspektivischen Darstellung der Rolle 1 gemäß Figur 2 sind Teile der Rolle 1 freigelegt, um den inneren Aufbau der Rolle 1 besser zu veranschaulichen.

## Patentansprüche

1. Eisen-Chrom-Molybdän-Mangan-Legierung zur Oberflächenbeschichtung von Rollen für Walzanlagen mit folgender chemischer Zusammensetzung (in Masse-%):
| | |
|---|---|
| Cr: | 7,5 - 10,5 % |
| Mo: | 1,0 - 2,0 % |
| C: | 0,2 - 0,5 % |
| Mn: | 0,4 - 1,4 % |
| Si: | 0 - 1,0 % |
| Ni: | 0 - 0,6 % |
| Ti: | 0 - 0,4 % |
| V: | 0 - 0,4 % |
| S: | 0 - 0,3 % |
| P: | 0 - 0,3 % |
| Cu: | 0 - 0,3 % |
| Rest: | Fe sowie herstellungsbedingte Verunreinigungen. |

2. Legierung nach Anspruch 1 mit folgender chemischer Zusammensetzung:
| | |
|---|---|
| Cr: | 7,5 - 10,5 % |
| Mo: | 1,0 - 2,0 % |
| C: | 0,2 - 0,5 % |
| Mn: | 0,4 - 1,4 % |
| Si: | 0,2 - 0,6 % |
| Ni: | 0,1 - 0,4 % |
| Ti: | 0,04 - 0,3 % |
| V: | 0,04 - 0,3 % |
| S: | 0 - 0,2 % |
| P: | 0 - 0,2 % |
| Cu: | 0-0,2% |
| Rest: | Fe sowie herstellungsbedingte Verunreinigungen. |

3. Legierung nach Anspruch 1 mit einem Anteil an Cr von 8,5 - 10,5 %.

4. Legierung nach Anspruch 1 mit einem Anteil an Mo von 1,2 - 1,8 %.

5. Legierung nach Anspruch 1 mit einem Anteil an C von 0,35 -0,45 %.

6. Legierung nach Anspruch 1 mit einem Anteil an Mn von 0,6 - 1,0 %.

7. Verwendung einer Legierung nach Anspruch 1 zur Oberflächenbeschichtung von Rollen für Walzanlagen.

8. Verfahren zur Erstellung einer Oberflächenbeschichtung von Rollen für Walzanlagen, bei dem durch Auftragsschweißung auf der Oberfläche von Rollen eine Beschichtung in Form einer Legierung nach Anspruch 1 erstellt wird.

9. Rolle (1) für Walzanlagen mit einer Oberflächenbeschichtung (3a) aus einer Legierung nach Anspruch 1.

10. Rolle (1) für Walzanlagen mit einer Oberflächenbeschichtung (3a), die mit einem Verfahren nach Anspruch 8 erstellt ist.
